# EUROPEAN PATENT APPLICATION

(11) **EP 4 807 540 A1**
(43) Date of publication of application: **16.09.2026**
(21) Application number: 25899442.5
(22) Date of filing: 19.05.2025
(51) Int. Cl.: G06F 9/38

(54) **CENTRAL PROCESSING UNIT CORE, INSTRUCTION PROCESSING METHOD, ELECTRONIC DEVICE AND STORAGE MEDIUM**

(30) Priority: 24.12.2024 CN 202411919034
(71) Applicant: HYGON INFORMATION TECHNOLOGY CO., LTD., Binhai New Area, Tianjin 300392 (CN)
(72) Inventor: ZHAO, Chunyao, Tianjin 300392 (CN); CUI, Zehan, Tianjin 300392 (CN)
(74) Representative: Maiwald GmbH
(86) International application number: PCT/CN2025/095681
(87) International publication number: WO 2026/137680

(57) **Abstract**

Embodiments of the present disclosure relate to a processor core including a front end, an instruction processing method, equipment and a medium. The front end of the processor core includes N instruction fetch and decode pipelines, at least one instruction cache and at least one micro-op cache, where N is an integer greater than or equal to 2. Each instruction fetch decoding pipeline includes instruction fetch selection logic, an instruction cache port, a micro instruction cache port, a decoder and a first micro instruction queue. The prediction information enters the first micro-op queue for distribution through the processing of instruction decoding pipeline or micro-op pipeline among the N instruction fetch decoding pipelines. The processor core has larger average front-end bandwidth and improved processing performance.

## Description

### CROSS REFERENCE TO RELATED APPLICATION

This application claims the priority to and benefits of the Chinese Patent Application, No. 202411919034.0, filed on December 24, 2024, and the disclosure of the above-mentioned China Patent Application is hereby incorporated in its entirety as a part of this application.

### TECHNICAL FIELD

The present disclosure relates to a processor core, an instruction processing method, an electronic device, and a computer-readable storage medium.

### BACKGROUND

A processor core (CPU core) front-end typically includes branch prediction (BP), instruction fetch (IF) module, instruction decoder (DE) module, and instruction dispatch (DI) module. In some high-performance processors, the instruction decoder module further includes a u-op cache (i.e., micro-op cache). The micro-op cache stores micro-ops obtained from the instruction decoder. When addresses of these micro-ops are accessed for a second time, the processor directly accesses the micro-op cache, and no longer accesses the instruction cache and decodes an instruction. In some processor architectures, instruction decoding increases latency, reduces bandwidth, and increases power consumption. If the micro-op cache is employed, negative effects from the decoding are greatly diminished in a large quantity of programs. A selection logic to access either the instruction cache or the micro-op cache is between a branch prediction stage and an instruction fetch stage.

### SUMMARY

At least one embodiment of the present disclosure provides a processor core, including a front end, where the front end includes N fetch decode pipelines, at least one instruction cache and at least one micro-op cache, and N is an integer greater than or equal to 2; each of the fetch decode pipelines includes a fetch selection logic, an instruction cache port, a micro-op cache port, a decoder and a first micro-op queue; the instruction cache port is configured to read and write the instruction cache, and provide an instruction acquired from the instruction cache to the decoder; the micro-op cache port is configured to read and write the micro-op cache, and provide a first micro-op acquired from the micro-op cache to the first micro-op queue; the decoder is configured to decode an instruction acquired from the instruction cache port into a second micro-op and provide the second micro-op acquired by decoding to the first micro-op queue; and the fetch selection logic is configured to select the instruction cache port and the decoder to perform a fetch decode operation, or to select the micro-op cache port to perform a fetch decode operation.

For example, at least one embodiment of the present disclosure provides a processor core, where the front end further includes: an instruction dispatch unit configured to dispatch a micro-op received from a first micro-op queue of one of the N fetch decode pipelines, for execution.

For example, at least one embodiment of the present disclosure provides a processor core, where the instruction cache is configured to be coupled to an instruction cache port of the N fetch decode pipelines via a memory interleaving technique or a multi-port technique, to enable the N fetch decode pipelines to access the instruction cache; and/or the micro-op cache is configured to be coupled to a micro-op cache port of the N fetch decode pipelines via the memory interleaving technique or the multi-port technique, to enable the N fetch decode pipelines to access the micro-op cache.

For example, at least one embodiment of the present disclosure provides a processor core, where the front end further includes a branch prediction unit configured to generate a prediction result for the N fetch decode pipelines based on a received instruction address.

For example, at least one embodiment of the present disclosure provides a processor core, the front end further includes a boundary information determination unit configured to generate boundary information according to the prediction result, and to generate at least one information stream according to the prediction result; where a type of the boundary information includes a last byte of a jump branch instruction, a last byte of the prediction result, or a last byte of an intermediate instruction in the prediction result.

For example, at least one embodiment of the present disclosure provides a processor core, where the front end further includes a window selection unit configured to allocate the at least one information stream to the N fetch decode pipelines to process the at least one information stream, where an allocation strategy of the window selection unit includes a strategy that is based on any one of: a quantity of pieces of the prediction result, a quantity of bytes of the prediction result, a blocking degree of the N fetch decode pipelines, and a switching frequency of window in different modes.

For example, at least one embodiment of the present disclosure provides a processor core, where the front end further includes a reordering logic configured to reorder micro-ops resulting from the processing of the at least one information stream by the N fetch decode pipelines, and to send the reordered micro-ops to the instruction dispatch unit.

For example, at least one embodiment of the present disclosure provides a processor core, where the front end further includes a first arbitration logic and a second arbitration logic; where the prediction result includes prediction results for M threads, where M is an integer greater than or equal to 2; the first arbitration logic is configured to allocate prediction results in the M threads to the N fetch decode pipelines for processing; and the second arbitration logic is configured to sequentially select and send micro-ops corresponding to M threads acquired by the processing of the N fetch decode pipelines to the instruction dispatch unit.

For example, at least one embodiment of the present disclosure provides a processor core, where each of the fetch decode pipelines further includes a second micro-op queue; and the second micro-op queue is configured to receive, in each of the fetch decode pipelines, micro-ops from the decoder and/or the micro-op cache port.

At least one embodiment of the present disclosure further provides an instruction processing method, including: selecting, in response to an instruction processing request, a target fetch decode pipeline of N fetch decode pipelines included in a front end of a processor core to respond to the instruction processing request, where N is an integer greater than or equal to 2; selecting, in the target fetch decode pipeline, to perform a fetch decode operation via an instruction cache port and a decoder or via a micro-op cache port to respond to the instruction processing request; where in response to selecting to perform the fetch decode operation via the micro-op cache port to respond to the instruction processing request, the method includes: acquiring a first micro-op from a micro-op cache via the micro-op cache port and providing the first micro-op to a first micro-op queue; or in response to selecting to perform the fetch decode operation via the instruction cache port and the decoder to respond to the instruction processing request, the method includes: acquiring an instruction from an instruction cache via the instruction cache port and providing the instruction to the decoder and decoding the instruction into a second micro-op by the decoder and providing the second micro-op to the first micro-op queue.

For example, at least one embodiment of the present disclosure provides an instruction processing method, further including: dispatching a micro-op received from a first micro-op queue of one of target fetch decode pipelines from the N fetch decode pipelines for execution.

For example, at least one embodiment of the present disclosure provides an instruction processing method, where the instruction cache is coupled to an instruction cache port of a target fetch decode pipeline of the N fetch decode pipelines via a memory interleaving technique or a multi-port technique, to enable the target fetch decode pipeline of the N fetch decode pipelines to access the instruction cache; and/or the micro-op cache is coupled to a micro-op cache port of a target fetch decode pipeline of the N fetch decode pipelines by the memory interleaving technique or the multi-port technique, to enable the target fetch decode pipeline of the N fetch decode pipelines to access the micro-op cache.

For example, at least one embodiment of the present disclosure provides an instruction processing method, further including: generating a prediction result based on a received instruction address, to generate the instruction processing request for the target fetch decode pipeline of the N fetch decode pipelines.

For example, at least one embodiment of the present disclosure provides an instruction processing method, further including: generating boundary information according to the prediction result corresponding to the instruction processing request, and generating at least one information stream based on the prediction result; where a type of boundary information includes a last byte of a jump branch instruction, a last byte of the prediction result, or a last byte of an intermediate instruction in the prediction result.

For example, at least one embodiment of the present disclosure provides an instruction processing method, further including: allocating the at least one information stream to the target fetch decode pipeline of the N fetch decode pipelines via a window selection logic, to process the at least one information stream; where the window selection logic includes any one of a quantity of pieces based on the prediction result, a quantity of bytes of the prediction result, a blocking degree of the target fetch decode pipeline in the N fetch decode pipelines, and a switching frequency of window in different modes.

For example, at least one embodiment of the present disclosure provides an instruction processing method, further including: reordering micro-ops resulting from the processing of the at least one information stream by the target fetch decode pipeline of the N fetch decode pipelines for distribution.

For example, at least one embodiment of the present disclosure provides an instruction processing method, where the prediction result includes prediction results for M threads, where M is an integer greater than or equal to 2, the method further includes: allocating prediction results corresponding to the instruction processing request in the M threads to the target fetch decode pipeline in the N fetch decode pipelines for processing; and sequentially selecting micro-ops corresponding to the M threads resulting from processing by the target fetch decode pipeline of the N fetch decode pipelines for distribution.

For example, at least one embodiment of the present disclosure provides an instruction processing method, where in response to selecting to perform the fetch decode operation via the micro-op cache port to respond to the instruction processing request, the method includes: acquiring a first micro-op from a micro-op cache via the micro-op cache port and providing the first micro-op to a second micro-op queue; and selecting to perform the fetch decode operation via the instruction cache port and the decoder to respond to the instruction processing request includes: acquiring an instruction from an instruction cache via the instruction cache port and providing the instruction to the decoder, and decoding the instruction into a second micro-op by the decoder and providing the second micro-op to the second micro-op queue.

At least one embodiment of the present disclosure further provides an electronic device which includes the processor core as described in any of the above embodiments.

At least one embodiment of the present disclosure further provides an electronic device, including: a processor; and a memory including one or more computer program instructions; where one or more computer program instructions are executed by a processor to perform the instruction processing method as provided by any of the embodiments described above.

At least one embodiment of the present disclosure provides a computer-readable storage medium for non-transitorily storing computer-readable instructions, where the computer-readable instructions, when executed by a processor, implement the instruction processing method provided by any one of the embodiments of the present disclosure.

### BRIEF DESCRIPTION OF DRAWINGS

In order to explain the technical scheme of the embodiments of the present disclosure more clearly, the attached drawings of the embodiments will be briefly introduced below. Obviously, the attached drawings in the following description only relate to some embodiments of the present disclosure, and are not limited to the present disclosure.
Fig. 1 shows a schematic diagram of a pipeline of a processor core;
Fig. 2 shows a basic structure division schematic diagram of a processor;
Fig. 3 is a schematic diagram showing an example of a constitution of a front end of a CPU core;
Fig. 4 shows a schematic diagram of a branch prediction module;
Fig. 5 shows a schematic diagram of operations in a processor core to decode an instruction;
Fig. 6 shows a structurally schematic diagram of a processor core according to at least one embodiment of the present disclosure;
Fig. 7 shows a schematic flow diagram of an instruction processing method according to at least one embodiment of the present disclosure;
Fig. 8 shows a detailed flow diagram of an instruction processing method according to at least one embodiment of the present disclosure;
Fig. 9 shows a structure example of a processor core according to at least one embodiment of the present disclosure;
Fig. 10 shows a structure example of a processor core according to at least another embodiment of the present disclosure;
Fig. 11 shows a structure example of a processor core according to at least one further embodiment of the present disclosure;
Fig. 12 shows a schematic block diagram of an electronic device according to at least one embodiment of the present disclosure;
Fig. 13 is a structurally schematic diagram of a computer-readable storage medium according to at least one embodiment of the present disclosure; and
Fig. 14 shows a schematic block diagram of an electronic device according to at least another embodiment of the present disclosure.

### DETAILED DESCRIPTION

In order to make the purpose, technical scheme and advantages of the embodiment of the disclosure more clearly, the technical scheme of the embodiment of the disclosure will be described clearly and completely with the attached drawings. Obviously, the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Unless otherwise defined, technical terms or scientific terms used herein shall have their ordinary meanings as understood by people with ordinary skills in the field to which this disclosure belongs. The terms "first", "second" and the like used in this disclosure do not indicate any order, quantity or importance, but are only used to distinguish different components. Similarly, similar words such as "including" or "containing" mean that the elements or objects appearing before the word cover the elements or objects listed after the word and their equivalents, without excluding other elements or objects. Similar words such as "connected" or "connected" are not limited to physical or mechanical connection, but can include electrical connection, whether direct or indirect. "Up", "Down", "Left" and "Right" are only used to indicate the relative positional relationship. When the absolute position of the described object changes, the relative positional relationship may also change accordingly.

A processor core (CPU core) of a single-core processor or a multi-core processor improves instruction execution efficiency by a pipeline technique. According to the pipeline technique, complete operational steps of the CPU core are divided into a plurality of sub-steps, and these sub-steps are executed in a pipeline manner to improve efficiency.

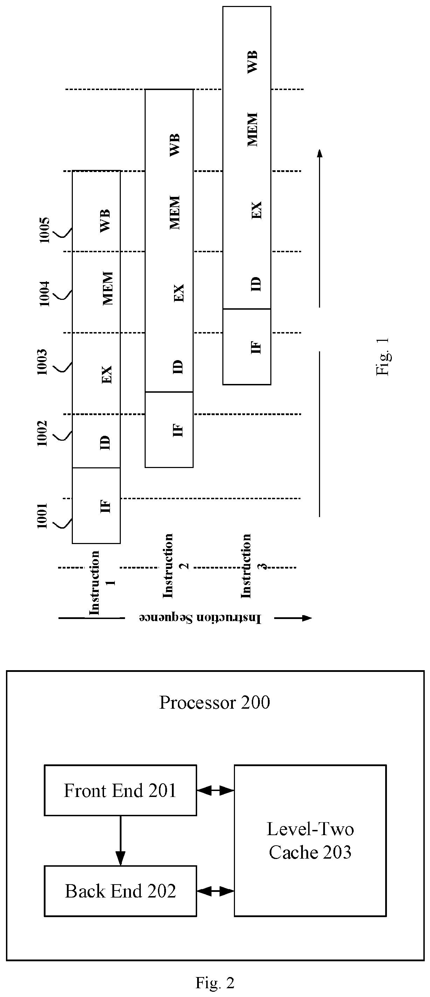

Fig. 1 shows an exemplary instruction pipeline of a scalar central processing unit (CPU), which includes a five-stage pipeline. As shown in Fig. 1, each instruction may be sent every clock cycle and executed in a fixed time (e.g., 5 clock cycles). The execution of each instruction is divided into 5 steps: an instruction fetch (IF) phase 1001, an instruction decode (ID) phase 1002, an execute (EX) phase 1003, an MEM phase 1004, and a write back (WB) phase 1005. In the IF stage 1001, a specified instruction is fetched from an instruction cache. A portion of the fetched specified instruction is used to specify a source register that is available for executing an instruction. In the ID stage 1002, a control logic is generated after decoding to fetch content of the specified source register. According to the control logic, arithmetic or logical operations are performed in the EX stage 1003 using the fetched content. In the MEM phase 1004, execution of an instruction may read/write to a memory in the data cache. Finally, in the WB stage 1005, the value obtained by executing the instruction may be written back to a certain register.

The preceding pipeline step in a CPU is usually divided as a front end. For example, taking a five-stage pipeline as an example, modules used for a fetch stage and a decoding stage is divided as a CPU front end. Correspondingly, the following pipeline steps in the CPU are divided as a back-end, e.g., taking a five-stage pipeline as an example, modules used for the execution stage, the memory-accessing stage and the write-back stage are denoted as a CPU back-end.

In order to support a high operating frequency, each pipeline stage may in turn include a plurality of (sub-) pipelined stages (clock cycles). Although each pipeline stage performs a limited quantity of operations, each clock can thus be made shortest, improving the performance of a CPU core by increasing the operating frequency of a CPU. Each pipeline stage may also further improve the performance of the processor core by accommodating more instructions (i.e., a superscalar technique). A superscalar refers to a method for executing a plurality of instructions in parallel in one cycle, increasing instruction-level parallelism. A processor capable of processing a plurality of instructions in one cycle is called a superscalar processor. For example, the superscalar processor may further support out-of-order execution. The out-of-order execution means that a CPU employs a technique that allows multiple instructions to be distributed out of program-defined order to the corresponding circuit unit for processing.

The processor core translates each architecture instruction ("instruction" for short) into one or more micro-ops in the micro-architecture, and each micro-op performs only a limited quantity of operations, thus ensuring that each pipeline stage is short to increase operating frequency of the processor core. For example, a memory read instruction (load) may be translated into an address-generating micro-op and a memory read micro-op. The second one micro-op may rely on a result of the first one micro-op. Thus, the execution of the second micro-op may begin only after the execution of the first micro-op. The micro-ops contain a plurality of microarchitecture-related domains that are used to pass relevant information between pipeline stages.

Speculative Execution is another technique to improve processor performance. This technique is to execute a subsequent instruction before a previous instruction being finished executing. One technique for the speculative execution is branch prediction. As mentioned above, a fetch unit is responsible for providing the processor with the instructions to be executed next. In the fetch stage, in addition to fetching multiple instructions, a fetch address for the next cycle is determined. Thus, it is determined in this stage whether a conditional branch instruction exists, whether a branch jumps (direction) if branches exist, and the target address. The fetch unit includes a branch prediction unit (a branch predictor) to perform branch prediction. The branch prediction unit (the branch predictor) at the front end of the processor core predicts a jump direction of a conditional branch instruction, pre-fetches, and executes an instruction(s) in that direction. Another technique for the speculative execution is to execute a memory read instruction before addresses of all previous memory write instructions are obtained.

The speculative execution further increases the degree of inter-instruction parallelism, thereby significantly improving processor core performance. When a speculative execution error occurs, such as a branch prediction error is found, or a write instruction preceding a memory read instruction overwrites the same address, all instructions in the pipeline following the faulty instruction need to be flushed (or referred to as "eliminate"), and then the program jumps to the point of error and re-executes to ensure correctness of program execution.

Fig. 2 shows a basic structure division schematic diagram of a processor. The processor 200 includes at least one CPU core (a processor core), for example, the CPU core includes a front end 201 and a back end 202, and at least one level of cache, for example, the at least one level of cache includes a level-one cache (not shown in the figure) provided inside the CPU core, and a level-two cache 203 outside the CPU core. The level-two cache 203 serves as a single structure.

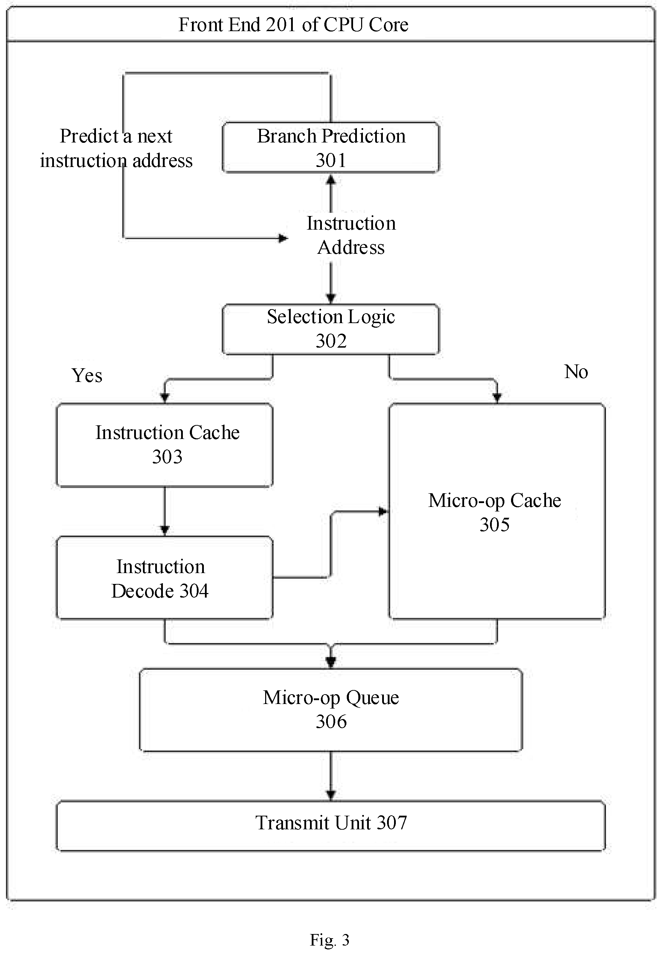

Fig. 3 is a schematic diagram showing an example of the constitution of a front end of a CPU core. The front end 201 of the CPU core includes a fetch unit, a decode unit and a transmit unit. The fetch unit includes a branch prediction 301 and a selection logic 302. The decode unit includes an instruction cache 303, an instruction decode 304, a micro-op cache 305 and a micro-op queue 306. A transmit unit 307 is connected to the micro-op queue 306. The CPU core has both an instruction cache and a micro-op cache, and thus has microarchitectural optimization. The instruction address fetched by the fetch unit, which may be a program counter address, or simply a PC address, is predicted by the branch prediction 301 to obtain the address of the next instruction to be executed. At the same time, the instruction address passes through the selection logic 302 to determine whether instruction decoding is needed for the instruction corresponding to the instruction address. If "yes", the path to the left in Fig. 3 is followed, and the instruction needs to be decoded. If "no", the path to the right in Fig. 3 is followed, and the instruction does not need to be decoded, but the micro-op cache is accessed to obtain the corresponding micro-op group data.

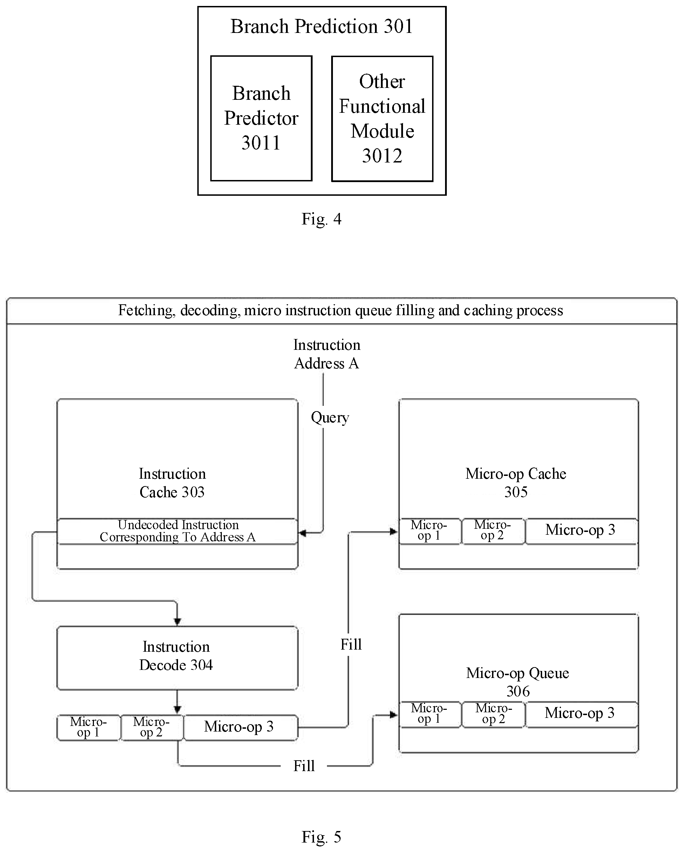

Fig. 4 shows a schematic diagram of a branch prediction module. In conjunction with Fig. 3, the instruction address to be entered into the processor pipeline enters the branch prediction 301 module first, accessing the branch predictor 3011 and the other functional modules 3012, respectively. The branch predictor 301 is accessed to determine whether there is a branch instruction, the branch direction when there is the branch instruction, and the jump address in a section starting at the instruction address (which may be, for example, the range of the instruction address to the following subsequent first one alignment address, e.g., the processor alignment address may be 64 bytes). Access to other functional modules is to obtain some key information, so as to facilitate access to subsequent modules. Other functional blocks may include, for example, a micro-tag cache of micro-ops, a micro-tag cache of instructions, etc. If a jumpable branch is predicted, the next instruction address is the jump address of the branch. If no jumpable branch is predicted, the next instruction address is the starting address of the next alignment address.

Fig. 5 shows a schematic diagram of operations in a processor core to decode an instruction. In conjunction with Fig. 3, according to the instruction address A, the instruction cache 303 is queried to obtain undecoded instruction data (for example, one or more instructions) corresponding to the instruction address A, and then the instruction data is decoded into a plurality of micro-ops (these micro-ops may be referred as a micro-op group, for example, including a micro-op 1, a micro-op 2, a micro-op 3, etc.) via the instruction decode 304. The resulting micro-op group is, on the one hand, sent to the micro-op queue 306 to wait for the transmit unit 307 to allocate and send it to the corresponding execution unit in the back end of the CPU core for execution, and, on the other hand, stored in the micro-op cache 305 to wait for a possible subsequent re-access if certain conditions are met (e.g., the micro-op group is a commonly used micro-op group).

In an embodiment, the processor core may update the micro tag cache of micro-ops in the other functional block 3012 while saving the micro-op group into the micro-op cache 305.

The inventors of the present disclosure have noted that the above-mentioned processors have only one pipeline including branch prediction, fetching, decoding and micro-op cache. With the trend of increasing instruction distribution bandwidth (distributing more instructions per unit time) and memory access bandwidth, and increasing the quantity of various execution units, the front end of the processor core gradually fails to meet the demand of the back end of the processor core to execute more instructions, and thus how to increase the front-end bandwidth becomes a problem to be solved by the mainstream processors.

Simultaneous Multithreading (SMT) technology is an important technology to improve the overall performance of CPU. It uses the multi-sent, out-of-order execution mechanism of high-performance CPU core to execute instructions of multiple threads at the same time. When such a physical CPU core is presented to a software and an operating system, it presents as multiple virtual CPU cores. When the modern multi-transmit high-performance CPU core executes a single thread, its internal multiple execution units and hardware resources cannot be fully utilized in most of the time. When the thread is running paused for some reasons, such as L2 cache misses, the hardware execution unit can only idle, which results in a waste of hardware resources and reduces the performance-to-power ratio. In SMT mode, e.g., dual thread mode (i.e., SMT2), when one thread stops running, the other threads can still run, which improves the utilization of hardware resources, thereby improving the multithreading throughput, overall performance and performance-to-power ratio of the CPU core. It should be noted that the performance of a thread running in SMT is often lower than its single-threaded mode due to sharing CPU core resources with other threads.

In the SMT mode, at least one stage in the pipeline of the processor core is time-sharing multiplexed. That is, a thread may occupy a pipeline stage of a pipeline at a time, and other threads may not occupy the pipeline stage of the pipeline at that time. However, if there are two pipelines, each thread may can occupy a single one pipeline. In this way, the overall performance of the SMT will be improved even more.

The inventors of the present disclosure also note that the advantages of multiple pipelines are not fully utilized for multi-thread processor cores, which can only allow multithreading to use a partially expanded plurality of pipelines in either an instruction decode mode or a micro-op mode.

At least one embodiment of the disclosure provides a processor core, an instruction processing method, an electronic device, and a storage medium. A processor core of an embodiment of the present disclosure includes a front end. The front end includes N fetch decode pipelines, at least one instruction cache and at least one micro-op cache, and N is an integer greater than or equal to 2. Each of the fetch decode pipelines includes a fetch selection logic, an instruction cache port, a micro-op cache port, a decoder and a first micro-op queue. The instruction cache port is configured to read and write the instruction cache, and provide an instruction acquired from the instruction cache to the decoder; the micro-op cache port is configured to read and write the micro-op cache, and provide a first micro-op acquired from the micro-op cache to the first micro-op queue; the decoder is configured to decode an instruction acquired from the instruction cache port into a second micro-op and provide the second micro-op acquired by decoding to the first micro-op queue; and the fetch selection logic is configured to select the instruction cache port and the decoder to perform a fetch decode operation, or to select the micro-op cache port to perform a fetch decode operation. The first micro-op and the second micro-op are used herein to refer to micro-ops that are described as objects in the two modes of processing, respectively.

At least one embodiment of the present disclosure further provides an instruction processing method corresponding to the processor core described above.

A processor core provided by at least one embodiment of the present disclosure may, in one aspect, provide increased processor front-end bandwidth and improved processor performance by designing a plurality of fetch decode pipelines, each of which may operate in an instruction decode mode and a micro-op cache mode, where regardless of whether a pipeline in either the instruction decode mode or the micro-op cache mode is blocked, another pipeline may be used to carry prediction information, thereby allowing more micro-ops to accumulate in a micro-op queue for execution by a processor core back-end. In another aspect, at least one embodiment of the present disclosure provides a processor core that may allow multiple threads to use multiple pipelines, both in the instruction decode mode and in the micro-op cache mode, each of which may result in a larger average front-end bandwidth, thereby significantly improving multithreading performance.

Hereinafter, embodiments of the present disclosure will be described in detail with reference to the accompanying drawings.

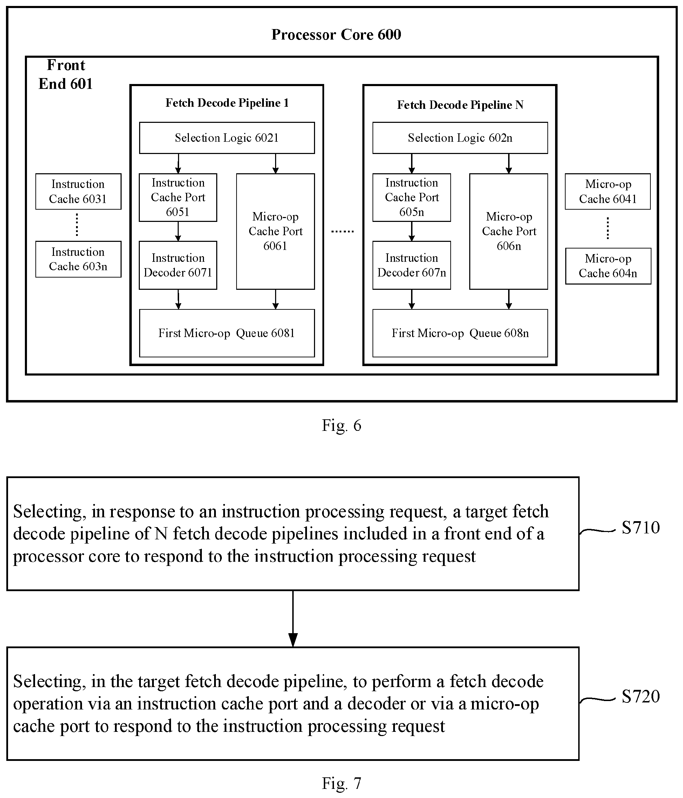

Fig. 6 shows a structurally schematic diagram of a processor core according to at least one embodiment of the present disclosure.

As shown in Fig. 6, the processor core 600 includes a front end 601. The front end 601 includes N fetch decode pipelines (e.g., N = 2, i.e., a fetch decode pipeline 1 and a fetch decode pipeline 2 as shown), at least one instruction cache 6031-603n, and at least one micro-op cache 6041-604n. It should be noted that a quantity of fetch decode pipelines may be based on the specific design performance of the front end of the processor core and is not a limitation of the present disclosure.

The fetch decode pipeline 1 will be described below as an example. The fetch decode pipeline 1 includes a selection logic 6021, an instruction cache port 6051, a micro-op cache port 6061, an instruction decoder 6071, and a first micro-op queue 6081. For example, an instruction cache port 6051, an instruction cache (for example, an instruction cache 6031) and an instruction decoder 6071 constitute an instruction decode pipeline (for an instruction decoding mode). For example, a micro-op cache port 6061 and a micro-op cache (e.g., a micro-op cache 6041) form a micro-op pipeline (for the micro-op cache mode). The internal structure of the remaining N-1 fetch decode pipelines is the same as that of the fetch decode pipeline 1 and will not be described in detail here.

In the embodiments described above, for example, there is only one instruction cache (e.g., the instruction cache 6031) and one micro-op cache (e.g., the micro-op cache 6041), whereby the N fetch decode pipelines share the instruction cache and the micro-op cache.

Exemplarily, all of the following description is introduced on the basis of the fetch decode pipeline 1, unless otherwise indicated.

For example, in a possible implementation, the front end 601 further includes an instruction dispatch unit configured to dispatch a micro-op received from a first micro-op queue of one of the N fetch decode pipelines for execution.

For example, the instruction dispatch unit (not shown) is arranged after the first micro-op queue 6081, configured to receive a micro-op(s) processed in the fetch decode pipeline 1 and to dispatch them to a subsequent execution unit(s) for execution.

For example, an instruction cache (for example, instruction cache 6031) is coupled to instruction cache ports 6051-605n via the memory interleaving technique, so that the instruction cache ports 6051-605n access the instruction cache 6031. A micro-op cache, such as a micro-op cache 6041, is coupled to the micro-op cache ports 6061-606n via the memory interleaving technique, so that the micro-op cache ports 6061-606n access the instruction cache 6041.

The memory interleaving technique reduces latency and increases data transfer rates by dividing memory modules into multiple independent channels and alternately allocating data blocks to different channels so that multiple channels can be operated simultaneously while accessing memory.

For example, an instruction cache (for example, instruction cache 6031) is coupled to the instruction cache ports 6051-605n via the multiport technology, so that the instruction cache ports 6051-605n access the instruction cache 6031. A micro-op cache, such as a micro-op cache 6041, is coupled to the micro-op cache ports 6061-606n via the multi-port technique, so that the micro-op cache ports 6061-606n access the instruction cache 6041.

The multi-port technology provides multiple ports, each of which can independently read and write, which allows multiple requests to be processed at the same time, thereby reducing latency and improving overall system performance.

The above-described instruction cache 6031 and micro-op cache 6041 are exemplary only, and the present disclosure is not limited in this respect. For example, if simultaneous access of two ports (e.g., an instruction cache port 6051 and an instruction cache port 6052) encounter an address conflict, the access of one of the ports (e.g., an instruction cache port 6052) may be deferred to wait for the end of the access of the non-deferred one.

For example, in a possible implementation, the front end 601 further includes a branch prediction unit configured to generate a prediction result for the N fetch decode pipelines based on a received instruction address.

For example, a branch prediction unit (not shown in the figure) is arranged before the fetch decode pipeline 1 to the fetch decode pipeline N. The branch prediction unit is used in the processor to optimize the performance of the program execution flow, in particular when processing conditional branch statements. For example, the branch prediction unit may generate a prediction result for the above-described fetch decode pipeline 1 to the fetch decode pipeline N based on the instruction address of an instruction entering the instruction pipeline (e.g., a jump instruction). For example, the branch prediction method of the branch prediction unit may include any one or more of static branch prediction, dynamic branch prediction, and indirect branch prediction.

For example, in one possible implementation, the front end 601 further includes a boundary information determination unit configured to generate boundary information based on the prediction result and to generate at least one information stream based on the prediction result. For example, based on the type of branch prediction unit, the type of boundary information includes the last byte of the jump branch instruction, the last byte of the prediction result, or the last byte of an intermediate instruction in the prediction result. For example, one type of branch prediction unit, in the event of a branch target branch target buffer (BTB) hit, forces the prediction information to end at the last byte of a branch instruction, rather than to the last byte of the cached basic block (or prediction window), even if the branch instruction has not jumped, thus resulting in the "last byte of the prediction result".

For example, the boundary information determination unit (not shown in the figure) is arranged after the branch prediction unit and before the fetch decode pipeline. For example, the quantity of information streams generated is based on the quantity of pieces of boundary information, and the present disclosure is not limited in this respect.

For example, the boundary information may be stored in a new cache structure, or may be stored in an existing cache structure. When the boundary information is the last byte of the intermediate instruction in the above-mentioned prediction result, the boundary information is decoded first and then stored in any one of the above-mentioned cache structures.

For example, in a possible implementation, the front end 601 may further include a window selection unit configured to allocate the at least one information stream to the N fetch decode pipelines to process the at least one information stream. For example, the allocation strategy of the window selection unit may include a strategy that is based on any one of: a quantity of pieces of the prediction result, a quantity of bytes of the prediction result, a degree of blocking of the N fetch decode pipelines, and a frequency of window switching in different modes.

For example, the window selection unit (not shown) is arranged after the boundary information determination unit and before the fetch decode pipeline. For example, at least one stream of information (e.g., three) is sent by the window selection unit to the fetch decode pipeline 1 and the fetch decode pipeline 2. For example, the at least one information stream may be sent to one pipeline or may be sent to a different pipeline. For example, two streams of information may be sent to the fetch decode pipeline 1 and the remaining one stream may be sent to the fetch decode pipeline 2. The particular quantity of allocated streams may be dynamically adjusted based on the execution status (e.g., the blocking level) of the fetch decode pipeline 1 by the fetch decode pipeline n. This disclosure is not limited in this respect.

For example, in a possible implementation, the front end 601 further includes a reordering logic configured to reorder micro-ops resulting from the processing of the at least one information stream by the N fetch decode pipelines to the instruction dispatch unit.

For example, the reordering logic (not shown) is arranged after the fetch decode pipeline and before the instruction dispatch unit. For example, since the fetch decode pipeline 1 to the fetch decode pipeline n (for example, the fetch decode pipeline 1 and the fetch decode pipeline 2) receive a prediction result corresponding to a single thread, the instruction data processed by the boundary information determination unit and distributed by the window selection unit is in an out-of-order state. That is to say, the information flows processed in the fetch decode pipeline 1 and the fetch decode pipeline 2 are in an out-of-order state. For example, on a first-in and first-out basis (FIFO), the micro-ops processed in the fetch decode pipeline 1 to accumulate in the first micro-op queue 6081-608n need to be reordered in the reorder logic to restore their order prior to entering the fetch decode pipeline, so that micro-ops processed by top-ranked instructions in the information stream can be distributed in time, thereby facilitating efficient and correct processing of the instruction sequence.

It should be noted that the boundary information unit, the window selection unit and the reordering logic mentioned in the above embodiments are applicable to the single-thread mode.

At least one embodiment of the present disclosure provides a processor core adapted for use in a single-thread mode. A plurality of fetch decode pipelines are designed, each of which may operate in an instruction decode mode and a micro-op cache mode. Regardless of whether a pipeline in either the instruction decode mode or the micro-op cache mode is blocked, another pipeline may be used to carry prediction information, thereby allowing more micro-ops to accumulate in a micro-op queue for execution by a processor core back end.

For example, in a possible implementation, the front end 601 further includes a first arbitration logic and a second arbitration logic. The prediction results include prediction results for M hardware threads (hereinafter referred to as "threads"), where M is an integer greater than or equal to 2 (e.g., M = 2, 4, or 8, etc.). The first arbitration logic is configured to allocate the prediction results in the M threads to the N fetch decode pipelines for processing. The second arbitration logic is configured to sequentially select and send micro-ops corresponding to M threads obtained by the N fetch decode pipelines to the instruction dispatch unit.

For example, the first arbitration logic (not shown in the figure) is arranged after the branch prediction unit and before the fetch decode pipeline. The second arbitration logic (not shown in the figure) is configured after the fetch decode pipeline and before the instruction dispatch unit. Since this embodiment is suitable for the multithreading mode, the boundary information determination unit, the window selection unit, and the reordering logic are not included.

For example, the prediction results include prediction results for two (M = 2) threads (e.g., a Thread 1 and a Thread 2) that the first arbitration logic assigns to the N fetch decode pipelines (e.g., two, a fetch decode pipeline 1 and a fetch decode pipeline 2) for processing. For example, the prediction result for the Thread 1 may be allocated to either the fetch decode pipeline 1 or the fetch decode pipeline 2. The specific assignment rules are not limited in this disclosure. For example, the second arbitration logic sequentially selects the micro-ops corresponding to the two threads obtained by the processing of the fetch decode pipeline 1 and the fetch decode pipeline 2 to be sent to the instruction dispatch unit.

For example, in a possible implementation, each of the N fetch decode pipelines may further include a second micro-op queue configured to receive micro-ops from an instruction decoder and/or a micro-op cache port in each of the fetch decode pipelines.

For example, in a possible implementation, a second micro-op queue (not shown) is in parallel (and equivalent) to the first micro-op queue (e.g., a first micro-op queue 6081), and is disposed after the instruction decoder 6071 and the micro-op cache port 6061, but before the second arbitration logic described above.

Exemplarily, the prediction results include prediction results for four (M = 4) threads (e.g., a Thread 1 to a Thread 4) for which the first arbitration logic assigns the prediction results to N fetch decode pipelines (e.g., two, a fetch decode pipeline 1 and a fetch decode pipeline 2). For example, the prediction results from the Thread 1 and the Thread 2 are allocated to the fetch decode pipeline 1 and prediction results from the Thread 3 and the Thread 4 are allocated to the fetch decode pipeline 2 for processing. It should be noted that the results of the above-described thread assignments are merely exemplary and the present disclosure is not intended to be limiting in this regard.

Taking the allocation result as an example to explain, for example, in the fetch decode pipeline 1, the micro-ops resulting from processing by the instruction decode pipeline or the micro-op pipeline in the Thread 1 may be sent to the first micro-op queue 6081, and the micro-ops resulting from processing by the instruction decode pipeline or the micro-op pipeline in the Thread 2 may be sent to the second micro-op queue.

For example, the micro-ops resulting from processing by the instruction decode pipeline or the micro-op pipeline in the Thread 1 may also be sent to the second micro-op queue, and the micro-ops resulting from processing by the instruction decode pipeline or the micro-op pipeline in the Thread 2 may be sent to the first micro-op queue 6081.

For another example, a part of micro-ops resulting from the processing by the instruction decode pipeline or micro-op pipeline in the Thread 1 may also be sent to the first micro-op queue 6081, and a remaining part of micro-ops resulting from the processing by the instruction decode pipeline or micro-op pipeline in the Thread 1 may be sent to the second micro-op queue, as may be the case for the Thread 2.

It should be noted that the allocation of micro-ops to the fetch decode pipeline 2 for processing the Threads 3 and 4 is similar to the fetch decode pipeline 1 and will not be described in detail herein.

The above-described processor cores provided by at least one embodiment of the present disclosure are adapted for use in a multithreading mode to allow multiple threads to use multiple pipelines, both in the instruction decode mode and in the micro-op cache mode, each of which may result in a larger average front-end bandwidth, thereby significantly improving multithreading performance.

A processor core of an embodiment of the present disclosure includes a back end in addition to the front end described above, e.g., the back end includes various execution units (e.g., arithmetic logic units (ALU), floating point units (FPU), load/store units (LSU), etc.), a reorder buffer (ROB), an ending unit, etc., which will not be described in detail herein.

The processor cores of embodiments of the present disclosure may be based on the X86 microarchitecture, the ARM microarchitecture, the RISC-V microarchitecture, the MIPS microarchitecture, etc. The disclosure is not limited in this respect.

At least one embodiment of the present disclosure further provides an instruction processing method including: selecting, in response to an instruction processing request, a target fetch decode pipeline of N fetch decode pipelines included in a front end of a processor core to respond to the instruction processing request, where N is an integer greater than or equal to 2; and selecting, in the target fetch decode pipeline, to perform a fetch decode operation via an instruction cache port and a decoder or via a micro-op cache port to respond to the instruction processing request. In response to selecting to perform the fetch decode operation via the micro-op cache port to respond to the instruction processing request, the method includes acquiring a first micro-op from a micro-op cache via the micro-op cache port and providing the first micro-op to a first micro-op queue. Or, in response to selecting to perform the fetch decode operation via the instruction cache port and the decoder to respond to the instruction processing request, the method includes acquiring an instruction from an instruction cache via the instruction cache port and providing the instruction to the decoder and decoding the instruction into a second micro-op by the decoder and providing the second micro-op to the first micro-op queue.

Fig. 7 shows a schematic flow diagram of an instruction processing method according to at least one embodiment of the present disclosure, which includes steps S710 and S720, as shown in Fig. 7.

Step S710, selecting, in response to an instruction processing request, a target fetch decode pipeline of N fetch decode pipelines included in a front end of a processor core to respond to the instruction processing request, where N is an integer greater than or equal to 2.

Step S720, selecting, in the target fetch decode pipeline, to perform a fetch decode operation via an instruction cache port and a decoder or via a micro-op cache port to respond to the instruction processing request.

For example, the instruction processing method described above corresponds to a processor core as shown in Fig. 6.

For example, in a possible implementation, before responding to an instruction processing request, the instruction processing method described above includes generating a prediction result according to a received instruction address for a target fetch decode pipeline of the N fetch decode pipelines. For example, the prediction result is transmitted by a branch prediction unit, the specific role of which has been described above and will not be described in detail here.

For example, in the instruction processing method described above, the predicted result include a predicted result(s) for a single thread or multiple threads (i.e., multiple hardware threads in a multithreaded processor).

For example, in a possible implementation, the boundary information is generated based on the predicted result and at least one information stream is generated based on the predicted result, e.g., a type of boundary information includes the last byte of the jump branch instruction, the last byte of the predicted result, or the last byte of the intermediate instruction in the predicted result. For example, the quantity of information streams is based on the quantity of boundary information. For example, if the last byte of the intermediate instruction in the predicted result is taken as boundary information, it is generated by decoding and stored in the cache structure. For example, the cache structure may be a newly added cache, or an existing cache may be reused, and the present disclosure is not limited thereto.

For example, in a possible implementation, the at least one information stream is allocated to the target fetch decode pipeline of the N fetch decode pipelines via a window selection logic so as to process the at least one information stream. For example, the window selection logic may include any one of a quantity of entries based on the prediction result, a quantity of bytes of the prediction result, a degree of blocking of a target fetch decode pipeline in the N fetch decode pipelines, and a frequency of window switching in different modes, etc. The disclosure is not limited in this respect. For example, the multiple information streams described above may be sent to one fetch decode pipeline, or may be sent to different fetch decode pipelines.

For example, in response to selecting to perform a fetch decode operation by the micro-op cache port in response to the instruction processing request, the method includes acquiring a first micro-op from a micro-op cache via the micro-op cache port and providing the first micro-op to a first micro-op queue.

For another example, in response to selecting to perform a fetch decode operation by the instruction cache port and the decoder in response to the instruction processing request, the method includes acquiring an instruction from an instruction cache via the instruction cache port and providing the instruction to the decoder, decoding the instruction into a second micro-op by the decoder and providing the second micro-op to the first micro-op queue.

As mentioned above, the micro-op cache port and the micro-op cache form a micro-op pipeline (i.e., being used in a micro-op cache mode), and the instruction cache port, the instruction decoder and the instruction cache form an instruction decode pipeline (i.e., being used in an instruction decoding mode). For example, the first micro-op refers to a micro-op obtained by micro-op pipeline processing. The second micro-op refers to a micro-op obtained by the instruction decode pipeline processing.

For example, in a possible implementation, the instruction cache is coupled to an instruction cache port of a target fetch decode pipeline of the N fetch decode pipelines by a memory interleaving technique or a multi-port technique, so that the target fetch decode pipeline of the N fetch decode pipelines accesses the instruction cache; and/or the micro-op cache is coupled to a micro-op cache port of a target fetch decode pipeline of the N fetch decode pipelines by the memory interleaving technique or the multi-port technique, so that the target fetch decode pipeline of the N fetch decode pipelines accesses the micro-op cache. The present disclosure is not limited to caching techniques that enable multi-port access, and the particular caching technique is based on the actual design.

For example, a micro-op cache port of a target fetch decode pipeline in the N fetch decode pipelines accesses the same micro-op cache, and an instruction cache port of the target fetch decode pipeline in the N fetch decode pipelines accesses the same instruction cache. It should be noted that if multiple ports (e.g., two instruction cache ports accessing an instruction cache) are simultaneously accessed due to address conflicts, the accesses are performed in sequence.

For example, in a possible implementation, the above instruction processing method further includes reordering, for distribution, micro-ops resulting from the processing of at least one information stream by a target fetch decode pipeline of the N fetch decode pipelines. For example, due to the presence of two streams in a target fetch decode pipeline, the two streams being determined by the respective pipelines in their respective fetch decode pipeline operating states, it may occur that the first-in information flows out of the pipeline later. Since the information stream needs to guarantee order at this stage, the micro-ops are required to be reordered for distribution.

For example, in a possible implementation, the above instruction processing method further includes dispatching, for execution, micro-ops received from a first micro-op queue of one of target fetch decode pipelines from the N fetch decode pipelines.

The above at least one embodiment of the present disclosure provides an instruction processing method by designing a plurality of target fetch decode pipelines, each of which may operate in an instruction decode mode and a micro-op cache mode, where regardless of whether a pipeline in either the instruction decode mode or the micro-op cache mode is blocked, another pipeline may be used to carry prediction information, thereby allowing more micro-ops to accumulate in a micro-op queue for execution by a processor core back-end.

For example, in a possible implementation, the predicted result includes a predicted result for M threads, where M is an integer greater than or equal to 2. The instruction processing method further includes allocating the prediction results in the M threads to a target fetch decode pipeline in the N fetch decode pipelines for processing; and sequentially selecting, for distribution, micro-ops corresponding to the M threads resulting from processing by the target fetch decode pipeline of the N fetch decode pipelines.

For example, if M < N (e.g., M = 3, N = 4), then each thread is sent to a respective fetch decode pipeline (e.g., the Thread 1 corresponds to the pipeline 1, and so on), where the fetch decode pipeline has a remainder (e.g., a remaining Pipeline 4).

For example, if M = N (e.g., M = N = 4), each thread is sent to a respective fetch decode pipeline (e.g., the Thread 1 corresponds to the Pipeline 1, and so on), where no fetch decode pipelines remain.

For example, if M > N (e.g., M = 5, N = 4), the remaining threads (e.g., a remaining Thread 5) are allocated to the existing pipelines for processing based on the execution (e.g., blocking) of all of the pipelines, out of which there is an allocated thread in each pipeline (e.g., the Thread 1 corresponds to the Pipeline 1, and so on).

It should be noted that the allocation order of the threads described above is merely exemplary, and may be based on actual design. The present disclosure is not intended to be limiting.

For example, the micro-ops corresponding to M threads (e.g., Thread 1 through Thread 4) processed by a target fetch decode pipeline of N fetch decode pipelines (e.g., a fetch decode pipeline 1 to a fetch decode pipeline 4) are sequentially selected for distribution (e.g., the fetch decode pipeline 1 corresponds to the Thread 1, and so on).

For example, in a possible implementation, in response to selecting to perform a fetch decode operation by the micro-op cache port in response to the instruction processing request, the method includes: acquiring a first micro-op from a micro-op cache via the micro-op cache port and providing the first micro-op to a second micro-op queue; and in response to selecting to perform a fetch decode operation by the instruction cache port and the decoder in response to the instruction processing request, the method includes acquiring an instruction from an instruction cache via the instruction cache port and providing the instruction to the decoder, decoding the instruction into a second micro-op by the decoder and providing the second micro-op to the second micro-op queue.

For example, the first micro-op and the second micro-op may be from the same thread or different threads. For example, the instruction data from the Thread 1 and the Thread 2 are processed in the fetch decode pipeline 1. Exemplarily, the first micro-op and the second micro-op resulting from the processing by the fetch decode pipeline 1 in the Thread 1 may be separately provided to the first micro-op queue or the second micro-op queue, or a part of the first micro-op and the second micro-op resulting from the processing by the fetch decode pipeline 1 in the Thread 1 may be provided to the first micro-op queue and the remaining portion may be provided to the second micro-op queue, as may the micro-op mode for the Thread 2.

At least one embodiment of the present disclosure provides an instruction processing method that may allow multiple threads to use multiple pipelines, both in the instruction decode mode and in the micro-op cache mode, each of which may result in a larger average front-end bandwidth, thereby significantly improving multithreading performance.

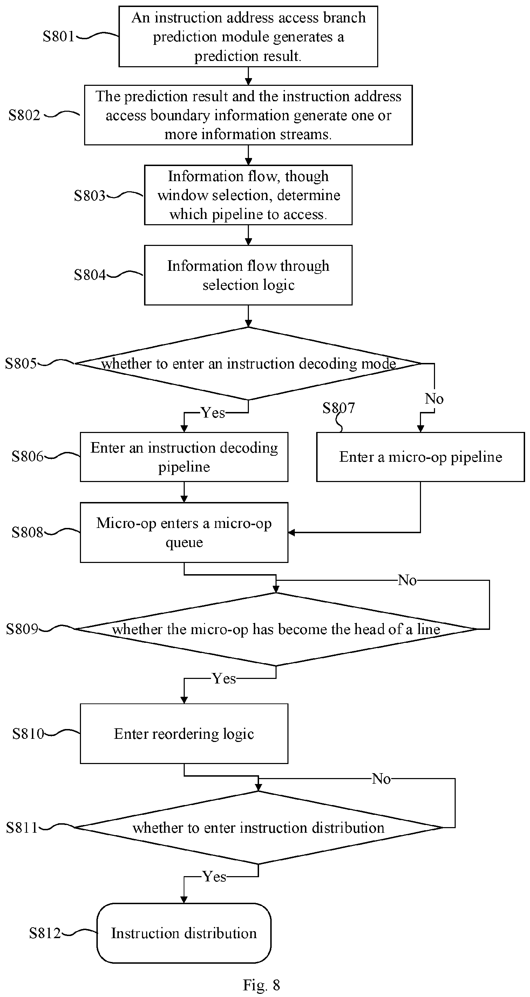

Fig. 8 shows a detailed flow diagram of an instruction processing method suitable for use in a single-thread mode according to at least one embodiment of the present disclosure. As shown in Fig. 8, the instruction processing method includes steps S801-S812.

Steps S801-S804, S806-S808, S810 and S812 have been described above, and will not be described again here.

Step S805, whether to enter an instruction decoding mode.

For example, it is determined whether the micro-op cache mode is enabled according to the information of cache hit or cache miss given by the micro-op cache. For example, the micro-op cache fetch mode may be enabled when the micro-op cache provides cache hit information that is present in the micro-op cache for successive sets of micro-ops, otherwise the prediction results continue to be processed in the instruction cache mode.

Step S809, whether the micro-op has become the head of a line.

For example, when the micro-op of the currently processed information flow becomes the head of a micro-op queue (FIFO queue), it is indicated that the micro-op of the previous flow has been dispatched (transmitted) so that there are no more micro-ops of the previous flow in the current micro-op queue. Thus, micro-ops from the different fetch decode pipelines can be reordered to restore the order prior to entering the N fetch decode pipelines.

Step S811, whether to enter instruction distribution.

For example, in a possible implementation, the instruction distribution is determined based on one or more of resource availability, data dependencies, scheduling policies, and branch prediction and prefetching.

For example, each execution unit (e.g., an arithmetic logic unit (ALU), a floating point unit (FPU), a load/store unit (LSU), etc.) has certain throughput limitation. If there is an idle execution unit currently, the corresponding instruction may be distributed. Otherwise, the instruction needs to wait until the required resources become available.

For example, in order to ensure the correctness of a program, the instruction distribution is required to take into account data dependencies. For example, if the result of one instruction is the input of another instruction, the latter cannot be executed before the previous one instruction. The reordering logic ensures that instructions are dispatched only when all preconditions are satisfied by keeping track of these dependencies.

For example, complex scheduling algorithms are often employed to determine which instructions should be distributed preferentially. The common scheduling algorithms include:

Oldest First: an instruction that arrives earliest at the reservation station and has no unresolved dependencies is selected.

Least Delay: the instructions that are expected to execute for the shortest time are preferably distributed to reduce the likelihood of pipeline stalls.

Maximization of resource utilization: the workload of each execution unit is balanced as much as possible to avoid overloading some units while leaving other units idle.

At least one embodiment of the present disclosure provides an instruction processing method that may be applicable to either a single-threaded processor core or a multi-threaded processor core. Whichever of the multiple fetch decode pipelines being blocked, there is a spare pipeline to take over the prediction information, so that more micro-ops can accumulate in the micro-op queue for back-end consumption, providing greater front-end bandwidth, further improving processor performance. Furthermore, the processor has two pipelines that consume increased branch prediction bandwidth whether the processor is in instruction decode mode or micro-op mode, thereby making more efficient use of the increased branch prediction bandwidth.

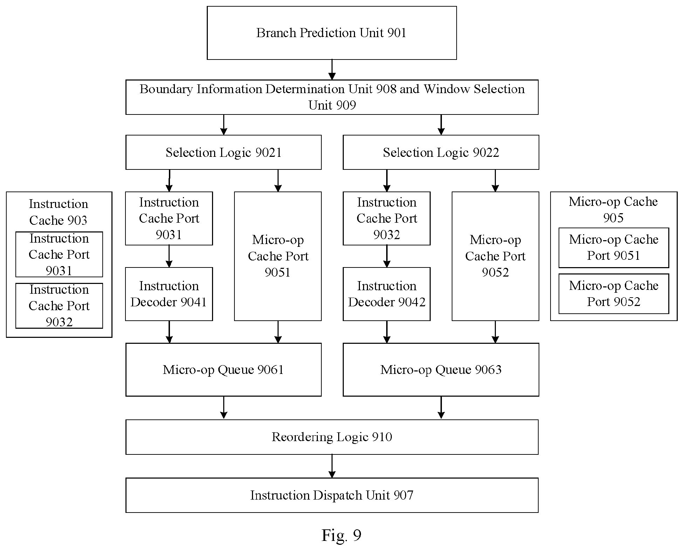

Fig. 9 shows a structure example of a processor core suitable for a single-thread mode according to at least one embodiment of the present disclosure.

As shown in Fig. 9, the front end of the processor core includes two fetch decode pipelines (e.g., a fetch decode pipeline 1 and a fetch decode pipeline 2). It should be noted that in other examples, the quantity of fetch decode pipelines may include two or more fetch decode pipelines depending on the particular design performance of the front end of the processor core.

The processor core front-end specifically includes a branch prediction unit 901, selection logics 9021-9022, an instruction cache 903, instruction cache ports 9031-9032, instruction decoders 9041-9042, a micro-op cache 905, micro-op cache ports 9051-9052, micro-op queues 9061-9063 (an example of a "first micro-op queue"), an instruction dispatch unit 907, a boundary information determination unit 908, a window selection unit 909, and a reordering logic 910. These components or logic may be implemented in hardware, firmware, software, or any combination thereof, and a functional description thereof is provided in the above description and will not be described in detail herein.

An example of one of two fetch decode pipelines is illustrated (e.g., a fetch decode pipeline 1). The fetch decode pipeline 1 includes the selection logic 9021, the instruction cache 903, the instruction cache port 9031, the instruction decoder 9041, the micro-op cache 905, the micro-op cache port 9051, and the micro-op queue 9061. The instruction cache 903, the instruction cache port 9031 and the instruction decoder 9041 constitute an instruction decode pipeline 1. The micro-op cache 905 and the micro-op cache port 9051 constitute a micro-op pipeline 1. The construction of the fetch decode pipeline 2 is similar to that of the fetch decode pipeline 1 and will not be described in detail herein.

The instruction cache port 9031 and the instruction cache port 9032 in the two fetch decode pipelines access the same instruction cache 903. The micro-op cache port 9051 and the micro-op cache port 9052 in the two fetch decode pipelines access the same micro-op cache 905.

The instruction cache 903 is configured to be coupled with instruction cache ports (for example, an instruction cache port 9031 and an instruction cache port 9032) of the two fetch decode pipelines via the memory interleaving technique or the multi-port technique so as to realize non-blocking multi-port access. Thus, the two fetch decode pipelines access the instruction cache. The micro-op cache 905 is configured to be coupled to micro-op cache ports (e.g., a micro-op cache port 9051 and a micro-op cache port 9052) of the two fetch decode pipelines via the memory interleaving techniques or the multi-port techniques to enable non-blocking multi-port access such that the two fetch decode pipelines access the micro-op cache.

For example, if the instruction cache ports described above (e.g., an instruction cache port 9031 and an instruction cache port 9032) access the instruction cache 903 at the same time with an address conflict, the accesses are performed in sequence. The access sequence is not limited by the present disclosure. For the micro-op cache, the processing is identical to that of the instruction cache and will not be described in detail herein.

The processor core shown in Fig. 9 is suitable for single-thread mode, and two fetch decode pipelines, including an instruction decode pipeline and a micro-op pipeline, are designed. No matter which pipeline is blocked, there is a spare pipeline to take over instructions to be processed, providing greater front-end bandwidth, and thus further improving processor performance.

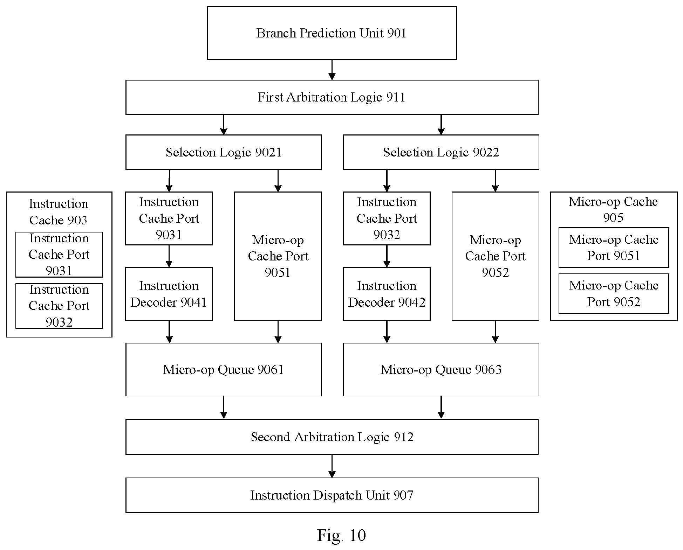

Fig. 10 shows a structure example of a processor core suitable for a dual-thread mode, i.e., the processor core is a SMT2 processor core, according to at least another embodiment of the present disclosure.

As shown in Fig. 10, the processor core front-end also includes two fetch decode pipelines. In contrast to the processor core of the embodiment shown in Fig. 9, the processor core structure does not include the boundary information determination unit 908, the window selection unit 909, and the reordering logic 910 on the one hand, and includes the first arbitration logic 911 and the second arbitration logic 912 on the other hand.

A prediction result from the branch prediction unit include prediction results for the two threads, and the first arbitration logic 911 is configured to distribute the prediction results in the two threads to the two fetch decode pipelines for processing.

The micro-op queues 9061 and 9063 of the processor core respectively receive micro-ops obtained after respective thread prediction results are processed, and the second arbitration logic 912 is configured to sequentially select and send micro-ops corresponding to two threads obtained by the processing of two fetch decode pipelines to an instruction dispatch unit.

The processor core shown in Fig. 10 is suitable for use in a dual-thread mode, allowing dual threads to use two fetch decode pipelines in both instruction decode and micro-op modes, resulting in a larger average front-end bandwidth per thread, thereby improving multithreading performance.

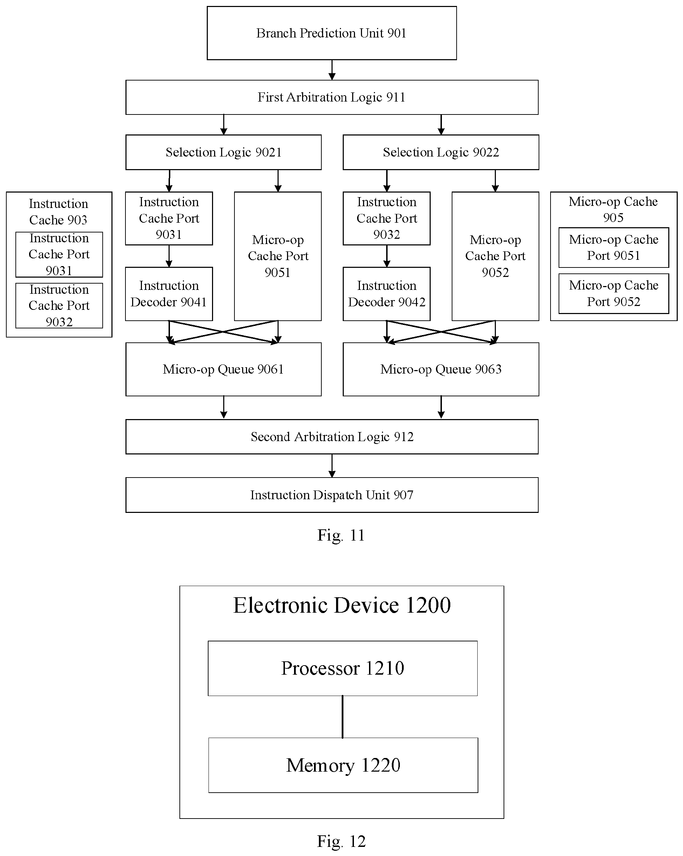

Fig. 11 shows a structure example of a processor core suitable for four-thread mode, i.e., the processor core is a SMT4 processor core, according to at least yet another embodiment of the present disclosure.

As shown in Fig. 11, the processor core front-end also includes two fetch decode pipelines, which add micro-op queues 9062 and 9064 (an example of a "second micro-op queue") in the two fetch decode pipelines, respectively, as compared to the processor core of the embodiment shown in Fig. 10.

The micro-op queues 9062 and 9064 are configured to receive micro-ops from the decoder and/or micro-op cache port in its corresponding fetch decode pipeline.

In the embodiment of Fig. 11, the prediction result includes prediction results for four threads (e.g., a Thread 1 to a Thread 4), while the fetch decode pipelines have two (e.g., a fetch decode pipeline 1 and a fetch decode pipeline 2). Arbitrated by first arbitration logic 911, for example, the prediction results from the Thread 1 and the Thread 2 may be allocated, for processing, to the fetch decode pipeline 1 and prediction results from the Thread 3 and the Thread 4 may be allocated, for processing, to the fetch decode pipeline 2.

For example, in the fetch decode pipeline 1, all the micro-ops resulting from processing by the instruction decode pipeline or the micro-op pipeline in the Thread 1 can be sent to the micro-op queue 9061 or the micro-op queue 9062. For example, part of micro-ops resulting from processing by the instruction decode pipeline or the micro-op pipeline in the Thread 1 may also be sent to the micro-op queue 9061, with the remainder of the micro-ops being sent to the micro-op queue 9062. The micro-ops from the Thread 2 in the fetch decode pipeline 1 are allocated in a manner consistent with that described above for micro-ops from the Thread 1, and will not be described in detail herein. The second arbitration logic 912 is configured to sequentially select and send micro-ops corresponding to the four threads obtained by the processing of the two fetch decode pipelines to the instruction dispatch unit.

The processor core shown in Fig. 11 is adapted for four-thread mode, allowing four threads to use two fetch decode pipelines in both instruction decode and micro-op modes, which may increase the quantity of instructions received by the front end of the processor core, thereby improving multithreading performance.

At least one embodiment of the present disclosure further provides an electronic device. Fig. 12 illustrates a schematic block diagram of an electronic device according to at least one embodiment of the present disclosure.

For example, as shown in Fig. 12, the electronic device 1200 includes a processor 1210 and a memory 1220. The memory 1220 is used to store non-transitory computer readable instructions (e.g., one or more computer program modules). The processor 1210 is operable to execute the computer program instructions which, when executed by the processor 1210, performs the instruction processing method provided by any of the embodiments of the present disclosure. The memory 1220 and the processor 1210 may be interconnected by a bus system and/or other form of connection mechanism (not shown).

The processor 1210 may be a central processing unit (CPU), a tensor processor (TPU), a network processor (NP), or a graphics processor (GPU), etc. that has data processing capabilities and/or program execution capabilities, a digital signal processor (DSP), an application specific integrated circuit (ASIC), a field programmable gate array (FPGA) or other programmable logic device, discrete gate or transistor logic, discrete hardware components, etc. For example, the central processing unit (CPU) may be an X86 or ARM architecture or the like. The processor 1210 may be a general purpose or special purpose processor that may control other components in the electronic device 1200 to perform desired functions.

For example, the memory 1220 may include any combination of one or more computer program products, which may include various forms of computer-readable storage media, such as volatile memory and/or non-volatile memory. The volatile memory may for example include a random access memory (RAM) and/or a cache storage (cache) etc. Non-volatile memory may include, for example, a read-only memory (ROM), a hard disk, an erasable programmable read-only memory (EPROM), a portable compact disc read-only memory (CD-ROM), a USB memory, a flash memory, etc. One or more computer program modules may be stored on the computer readable storage medium and executed by the processor 1210 to perform various functions of the electronic device 1200. Various applications and various data may also be stored in the computer-readable storage medium, as well as various data used and/or generated by the applications.

It should be noted that, in the examples of the present disclosure, the specific functions and technical effects of the electronic device 1200 may be referred to the above description regarding the instruction processing method, and will not be described in detail herein.

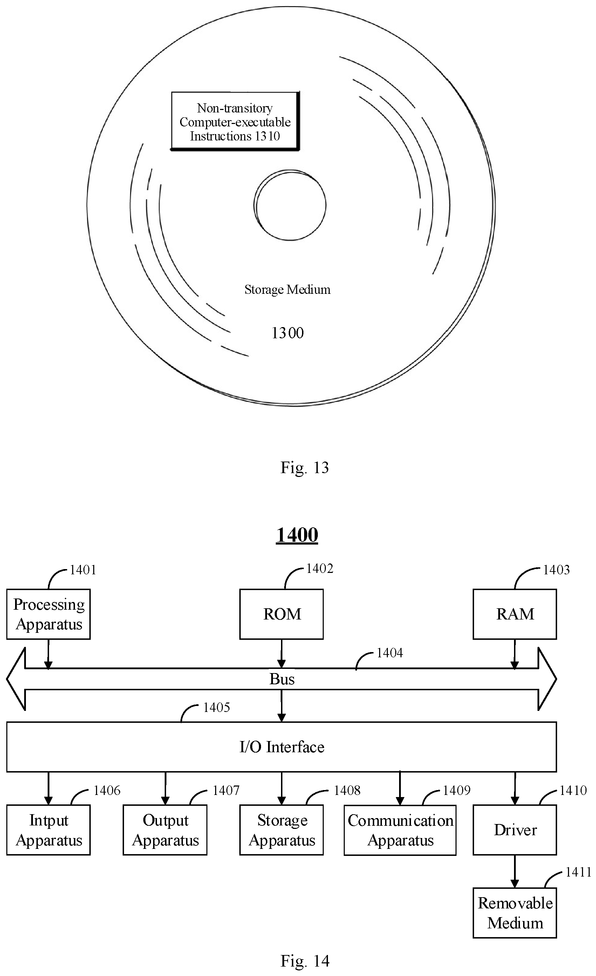

At least one embodiment of the present disclosure further provides a non-transitory storage medium. Fig. 13 is a schematic diagram of a computer-readable storage medium according to at least one embodiment of the present disclosure. For example, as shown in Fig. 13, the non-transitory storage medium 1300 stores non-transitory computer-executable instructions 1310 which, when executed by a computer (including a processor), may perform the instruction processing method of any embodiment of the present disclosure.

For example, one or more computer instructions may be stored on the storage medium 1300. Some of the computer instructions stored on storage medium 1300 may be, for example, instructions for implementing one or more of the steps of the above-described instruction processing method.

For example, the storage medium may include a storage component of a tablet computer, a hard disk of a personal computer, a random access memory (RAM), a read-only memory (ROM), an erasable programmable read-only memory (EPROM), a compact disc read-only memory (CD-ROM), a flash memory, or any combination of the above, as well as other suitable storage media. For example, the storage medium 1300 can include the memory 1220 in the electronic device 1200 described previously.

The technical effects of the storage medium provided by the embodiments of the present disclosure may be described with reference to the corresponding description of the instruction processing method in the above-mentioned embodiments, which will not be described in detail herein.

At least one embodiment of the present disclosure further provides an electronic device which includes the processor core of any of the embodiments described above.

Fig. 14 shows a schematic block diagram of an electronic device according to at least another embodiment of the present disclosure. The electronic device 1400 shown in Fig. 14 is merely an example and should not pose any limitation on the scope of use or functionality of embodiments of the present disclosure.

As shown in Fig. 14, in some examples, the electronic device 1400 includes a processing apparatus (e.g., a central processing unit, a graphics processor, etc.) 1401, which may include a processor core of any of the embodiments described above, and may perform various suitable actions and processes in accordance with a program stored in a read-only memory (ROM) 1402 or a program loaded from the storage apparatus 1408 into a random access memory (RAM) 1403. Various programs and data necessary for the operation of the computer system are also stored in the RAM 1403. The processing device(s) 1401, the ROM 1402, and the RAM 1403 are connected by a bus 1404. An input / output (I/O) interface 1405 is also connected to the bus 1404.

For example, the following components may be connected to the I/O interface 1405: an input apparatus 1406 including, for example, a touch screen, a touch pad, a keyboard, a mouse, a camera, a microphone, an accelerometer, a gyroscope, etc.; an output apparatus 1407 such as a liquid crystal display (LCD), a speaker, a vibrator, etc.; a storage apparatus 1408 including, for example, a magnetic tape, a hard disk, etc.; and also a communication apparatus 1409 including, for example, a network interface card such as a LAN card, a modem, etc. The communication apparatus 1409 may allow the electronic device 1400 to perform wireless or wired communication with other devices to exchange data, and perform communication processing via a network such as the Internet. The driver 1410 is also connected to the I/O interface 1405 as required. A removable medium 1411, such as a magnetic disk, an optical disk, a magneto-optical disk, a semiconductor memory, or the like, is mounted on the driver 1410 as needed so that a computer program read therefrom can be loaded into the storage apparatus 1408 as needed.

Although Fig. 14 illustrates an electronic device 1400 including various devices, it should be understood that not all of the illustrated devices are required to be implemented or included. More or fewer devices may alternatively be implemented or included.

For example, the electronic device 1400 may further include a peripheral interface (not shown in the figure) or the like. The peripheral interface may be of various types, such as a USB interface, a lighting interface, etc. The communication apparatus 1409 may communicate by wireless communication with networks such as the Internet, Intranets and/or wireless networks such as cellular telephone networks, wireless local area networks (LAN) and/or metropolitan area networks (MAN), and other devices. The wireless communication may use any of a variety of communication standards, protocols, and technologies including, but not limited to, Global System for Mobile Communications (GSM), Enhanced Data GSM Environment (EDGE), Wideband Code Division Multiple Access (W-CDMA), Code Division Multiple Access (CDMA), Time Division Multiple Access (TDMA), Bluetooth, Wi-Fi (e.g., based on the IEEE 802.11a, IEEE 802.11b, IEEE 802.11g, and/or IEEE 802.11n standards). Voice over Internet Protocol (VoIP), Wi-MAX, protocols for e-mail, instant messaging, and/or short message service (SMS), or any other suitable communication protocol.

For example, the electronic device 1400 may include any device such as a cellular phone, a tablet computer, a notebook computer, an electronic book, a game machine, a television, a digital photo frame, a navigator, a server, etc. and may be any combination of a data processing apparatus and hardware, and the embodiments of the present disclosure are not limited thereto.

With regard to the present disclosure, there are the following points to be described.
(1) In the drawings of embodiments of the disclosure, it refers to only the structures related to the embodiments of the disclosure, and other structures may be referred to by general designs.
(2) Features from the same embodiment or different embodiments of the disclosure may be combined with each other without departing from the scope of the disclosure.

The description above is only specific embodiments of the present disclosure, but the scope of protection of the present disclosure is not limited thereto. Any changes and substitutions which can be easily made by those skilled in the art within the technical scope of the present disclosure disclosed are included in the scope of protection the present disclosure. Accordingly, the scope of protection of the present disclosure should be determined with reference to the claims.

## Claims

1. A processor core, comprising a front end, wherein the front end comprises N fetch decode pipelines, at least one instruction cache and at least one micro-op cache, and N is an integer greater than or equal to 2;
each of the fetch decode pipelines comprises a fetch selection logic, an instruction cache port, a micro-op cache port, a decoder and a first micro-op queue;
the instruction cache port is configured to read and write the instruction cache, and provide an instruction acquired from the instruction cache to the decoder;
the micro-op cache port is configured to read and write the micro-op cache, and provide a first micro-op acquired from the micro-op cache to the first micro-op queue;
the decoder is configured to decode an instruction acquired from the instruction cache port into a second micro-op and provide the second micro-op acquired by decoding to the first micro-op queue; and
the fetch selection logic is configured to select the instruction cache port and the decoder to perform a fetch decode operation, or to select the micro-op cache port to perform a fetch decode operation.

2. The processor core according to claim 1, wherein the front end further comprises:
an instruction dispatch unit configured to dispatch a micro-op received from a first micro-op queue of one of the N fetch decode pipelines, for execution.

3. The processor core according to claim 1 or 2, wherein the instruction cache is configured to be coupled to an instruction cache port of the N fetch decode pipelines via a memory interleaving technique or a multi-port technique, to enable the N fetch decode pipelines to access the instruction cache; and/or
the micro-op cache is configured to be coupled to a micro-op cache port of the N fetch decode pipelines via the memory interleaving technique or the multi-port technique, to enable the N fetch decode pipelines to access the micro-op cache.

4. The processor core according to claim 2 or 3, wherein the front end further comprises:
a branch prediction unit configured to generate a prediction result for the N fetch decode pipelines based on a received instruction address.

5. The processor core according to claim 4, wherein the front end further comprises:
a boundary information determination unit configured to generate boundary information according to the prediction result, and to generate at least one information stream according to the prediction result,
wherein a type of the boundary information comprises a last byte of a jump branch instruction, a last byte of the prediction result, or a last byte of an intermediate instruction in the prediction result.

6. The processor core according to claim 5, wherein the front end further comprises:
a window selection unit configured to allocate the at least one information stream to the N fetch decode pipelines to process the at least one information stream, wherein an allocation strategy of the window selection unit comprises a strategy that is based on any one of: a quantity of pieces of the prediction result, a quantity of bytes of the prediction result, a blocking degree of the N fetch decode pipelines, and a switching frequency of window in different modes.

7. The processor core according to claim 5 or 6, wherein the front end further comprises:
a reordering logic configured to reorder micro-ops resulting from the processing of the at least one information stream by the N fetch decode pipelines, and to send the reordered micro-ops to the instruction dispatch unit.

8. The processor core according to any one of claims 4-7, wherein the front end further comprises a first arbitration logic and a second arbitration logic;
the prediction result comprises prediction results for M threads, and M is an integer greater than or equal to 2;
the first arbitration logic is configured to allocate prediction results in the M threads to the N fetch decode pipelines for processing; and
the second arbitration logic is configured to sequentially select and send micro-ops corresponding to M threads acquired by the processing of the N fetch decode pipelines to the instruction dispatch unit.

9. The processor core according to claim 8, wherein each of the fetch decode pipelines further comprises a second micro-op queue; and
the second micro-op queue is configured to receive, in each of the fetch decode pipelines, micro-ops from the decoder and/or the micro-op cache port.

10. An instruction processing method, comprising:
selecting, in response to an instruction processing request, a target fetch decode pipeline of N fetch decode pipelines comprised in a front end of a processor core to respond to the instruction processing request, wherein N is an integer greater than or equal to 2; and
selecting, in the target fetch decode pipeline, to perform a fetch decode operation via an instruction cache port and a decoder or via a micro-op cache port to respond to the instruction processing request,
wherein in response to selecting to perform the fetch decode operation via the micro-op cache port to respond to the instruction processing request comprises:
acquiring a first micro-op from a micro-op cache via the micro-op cache port and providing the first micro-op to a first micro-op queue; or
wherein in response to selecting to perform the fetch decode operation via the instruction cache port and the decoder to respond to the instruction processing request comprises:
acquiring an instruction from an instruction cache via the instruction cache port and providing the instruction to the decoder and decoding the instruction into a second micro-op by the decoder and providing the second micro-op to the first micro-op queue.

11. The instruction processing method according to claim 10, further comprising:
dispatching a micro-op received from a first micro-op queue of one of target fetch decode pipelines from the N fetch decode pipelines for execution.

12. The instruction processing method according to claim 10 or 11, wherein the instruction cache is coupled to an instruction cache port of a target fetch decode pipeline of the N fetch decode pipelines via a memory interleaving technique or a multi-port technique, to enable the target fetch decode pipeline of the N fetch decode pipelines to access the instruction cache; and/or
the micro-op cache is coupled to a micro-op cache port of a target fetch decode pipeline of the N fetch decode pipelines by the memory interleaving technique or the multi-port technique, to enable the target fetch decode pipeline of the N fetch decode pipelines to access the micro-op cache.

13. The instruction processing method according to claim 11 or 12, further comprising:
generating a prediction result based on a received instruction address, to generate the instruction processing request for the target fetch decode pipeline of the N fetch decode pipelines.

14. The instruction processing method according to claim 13, further comprising:
generating boundary information according to the prediction result corresponding to the instruction processing request, and generating at least one information stream based on the prediction result,
wherein a type of boundary information comprises a last byte of a jump branch instruction, a last byte of the prediction result, or a last byte of an intermediate instruction in the prediction result.

15. The instruction processing method according to claim 14, further comprising:
allocating the at least one information stream to the target fetch decode pipeline of the N fetch decode pipelines via a window selection logic, to process the at least one information stream,
wherein the window selection logic comprises a strategy that is based on any one of: a quantity of pieces of the prediction result, a quantity of bytes of the prediction result, a blocking degree of the target fetch decode pipeline in the N fetch decode pipelines, and a switching frequency of window in different modes.

16. The instruction processing method according to claim 15, further comprising:
reordering micro-ops resulting from the processing of the at least one information stream by the target fetch decode pipeline of the N fetch decode pipelines for distribution.

17. The instruction processing method according to any one of claims 13-16, wherein the prediction result comprises prediction results for M threads, wherein M is an integer greater than or equal to 2, and the instruction processing method further comprises:
allocating prediction results corresponding to the instruction processing request in the M threads to the target fetch decode pipeline in the N fetch decode pipelines for processing; and
sequentially selecting micro-ops corresponding to the M threads resulting from processing by the target fetch decode pipeline of the N fetch decode pipelines for distribution.

18. The instruction processing method according to claim 17, wherein in response to selecting to perform the fetch decode operation via the micro-op cache port to respond to the instruction processing request comprises:
acquiring a first micro-op from a micro-op cache via the micro-op cache port and providing the first micro-op to a second micro-op queue; and
in response to selecting to perform the fetch decode operation via the instruction cache port and the decoder to respond to the instruction processing request comprises:
acquiring an instruction from an instruction cache via the instruction cache port and providing the instruction to the decoder, and decoding the instruction into a second micro-op by the decoder and providing the second micro-op to the second micro-op queue.

19. An electronic device, comprising the processor core according to any one of claims 1-9.

20. An electronic device, comprising:
a processor; and
a memory comprising one or more computer program instructions;
wherein the one or more computer program instructions, when executed by the processor, implement the instruction processing method according to any one of claims 10-18.

21. A computer-readable storage medium for non-transitorily storing computer-readable instructions, wherein the computer-readable instructions, when executed by a processor, implement the instruction processing method according to any one of claims 10-18.
